# EUROPEAN PATENT APPLICATION

(11) **EP 4 749 588 A1**
(43) Date of publication of application: **27.05.2026**
(21) Application number: 24214430.1
(22) Date of filing: 21.11.2024
(51) Int. Cl.: G06V 20/59, G06V 10/82, G06V 40/16, G06V 40/20

(54) **METHODS AND SYSTEMS FOR GENERATING AN IMAGE RELATED TO AT LEAST ONE OCCUPANT OF A VEHICLE**

(71) Applicant: Aptiv Technologies AG, 8200 Schaffhausen (CH)
(72) Inventor: BARTH, Alexander, 8200 Schaffhausen (CH); YU, Allison, 8200 Schaffhausen (CH)
(74) Representative: Manitz Finsterwald Patent- und Rechtsanwaltspartnerschaft mbB

(57) **Abstract**

A computer implemented method for generating an image related to at least one occupant of a vehicle comprises the following steps carried out by computer hardware components: determining information on the at least one occupant; determining a status of the vehicle; and generating the image based on the information on the at least one occupant and based on the status of the vehicle.

## Description

### FIELD

The present disclosure relates to methods and systems for generating an image related to at least one occupant of a vehicle.

### BACKGROUND

Driving, in particular driving long distances, can be cumbersome, in particular for the passengers.

Accordingly, there is a need to provide entertainment, for example to passengers of a vehicle.

### SUMMARY

The present disclosure provides a computer implemented method, a computer system, a vehicle and a non-transitory computer readable medium according to the independent claims. Embodiments are given in the subclaims, the description and the drawings.

In one aspect, the present disclosure is directed at a computer implemented method for generating an image related to at least one occupant of a vehicle, the method comprising the following steps performed (in other words: carried out) by computer hardware components: determining information on the at least one occupant; determining a status of the vehicle; and generating (in other words: determining) the image based on the information on the at least one occupant and based on the status of the vehicle.

In other words, a method may be provided for generating an image based on who is in a vehicle and based on an operation state of the vehicle.

According to various embodiments, the information on the at least one occupant comprises information on the number of occupants. For example, if there is more than one occupant, a group image including faces of some or all the occupants may be generated as the image. For example, it may be determined for each of the occupants whether the occupant is a child, and the group image may only include the children; this may entertain the children on a long journey.

According to various embodiments, the information on at least one of the occupants comprises an image for the respective occupant. The image for the respective occupant (driver or passenger) may include an image of the face, which may be used for the image that is generated by the method.

The information on the respective occupant may include an image taken by a camera (for example by a camera provided in the vehicle, or by a camera of a phone carried by the occupant), and/ or an image taken from a social media profile of the occupant (wherein the social media profile may be identified based on identification of the occupant, for example using face recognition techniques), and/ or an image uploaded specifically for the purpose of various embodiments (such an image may for example show the occupant or an "avatar" of the occupant), and/ or a history of images showing the occupant in various different postures (in particular showing the occupant from the front), and/ or (visual) features of the person (for example in an encoded format, for example in a format that may be understood by an artificial neural network, so that data protection is enhanced since not the actual image but only features that may be used to generate the image may be stored).

According to various embodiments, the information on the at least one occupant comprises an age for each of the occupants. For example, the style of the image that is determined may be chosen according to the ages of the occupant, for example according to the age of the youngest occupant. For example, for children, a cartoon-like image may be generated, and for adults, a photo-realistic image may be generated.

According to various embodiments, the status of the vehicle comprises a status of a navigation system of the vehicle. According to various embodiments, the status of the vehicle comprises a destination of the vehicle. According to various embodiments, the computer implemented method further comprises the following step carried out by the computer hardware components: determining information related to the destination. According to various embodiments, the image is further determined based on the information related to the destination. For example, a photo of the destination may be included in the image.

According to various embodiments, the computer implemented method further comprises the following step carried out by the computer hardware components: determining an instruction based on the information on the at least one occupant and based on the status of the vehicle; and the image may be generated based on the instruction. According to various embodiments, the instruction comprises a textual instruction. According to various embodiments, the image is generated based on the instruction by providing the instruction to a trained machine learning method. For example, the information on the at least one occupant and the status of the vehicle may be used to determine an instruction (for example "generate an image showing the people identified by the information on the at least one occupant in front of a location specified by a navigation target obtained based on the status of the vehicle"), and the instruction may be used to determine the image by providing the instruction as an input to the trained machine learning method.

According to various embodiments, the trained machine learning method comprises at least one of Midjourney, Inc's Midjourney, OpenAl's DALL-E (for example Dall E3) or Stability Al's Stable Diffusion.

In another aspect, the present disclosure is directed at a computer system, said computer system comprising a plurality of computer hardware components configured to carry out several or all steps of the computer implemented method described herein.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a vehicle, comprising the computer system as described herein, a sensor and a storage, wherein the sensor is configured to determine the information on the at least one occupant, and the storage is configured to store information on the status of the vehicle.

In another aspect, the present disclosure is directed at a non-transitory computer readable medium comprising instructions for carrying out (in other words: comprising instructions which, when carried out by a processor, cause the processor to carry out) several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

### DRAWINGS

Exemplary embodiments and functions of the present disclosure are described herein in conjunction with the following drawings, showing schematically:
- Fig. 1: an illustration of a system for image generation according to various embodiments;
- Fig. 2: an illustration of external triggering of image generation according to various embodiments;
- Fig. 3: a flow diagram illustrating a method for generating an image related to at least one occupant of a vehicle according to various embodiments; and
- Fig. 4: a computer system with a plurality of computer hardware components configured to carry out steps of a computer implemented method for generating an image related to at least one occupant of a vehicle.

### DETAILED DESCRIPTION

Vehicles such as cars, trucks, or busses may be equipped with cabin cameras for monitoring the status of the driver and/or occupants, for example for driver monitoring related tasks and for capturing a status of the vehicle, for example for safety and comfort use cases.

Cabin sensing systems may capture who is in the cabin (for example a family with kids, a couple, or a single person) and may determine how the people in the cabin are. A navigation system may know the destination as well as the route of the vehicle.

According to various embodiments, an image may be generated fully customized based on who is in the cabin, which may provide a more personal experience than just showing standard pictures.

According to various embodiments, classification modules may classify the trip (for example into commute, vacation trip, first time/ regular location, or any other kind of trip); in other words: a trip recognition module may classify the trip purpose.

According to various embodiments, an AI method may be used to generate a number of images or short clips that show the passengers at different points of interest along the route or destination, for example a family picture in front of Eifel Tower, a couple picture next to a nice lake along the road, a selfie in front of a stadium, or the own car parked in front of a nice restaurant or spa or other interesting location.

Information on the route may be provided by a navigation system of the vehicle, and/ or other sources than the navigation system (for example from the ADAS (Advanced Driver Assistance Systems) perception system with localization capabilities or classification of the road type and/ or environment).

In other words, based on different trip categories, the system may generate images or short video clips to show the passengers at different points of interest along the route or destination.

With the methods and systems according to various embodiments, excitement and interest may be triggered, and the passengers may be entertained, which may enhance user experience, in particular on a on a longer trip.

The status information may for example include the number of passengers, seat occupancy status or seat occupancy classification, tracking of seating positions of passengers, detecting, relation of passengers to the seat positions, face expressions, hand gestures, or objects in the cabin (in other words: object existence).

The cabin cameras may further be configured to capture snapshots or video clips.

Recent advances in generative AI (artificial intelligence) technology enable to generate artificial images or videos, for example based on textual input or some specific conditions. This may make it possible to generate photorealistic images with a specific content that is defined by the input query.

The textual input may include a textual description and may determine what is shown in the image.

According to various embodiments, photorealistic images with a specific content that is defined by the text in the input query may be generated. The resulting image may be output in a different style, for example in a cartoon-like style or similar to a painting.

According to various embodiments, a generative model (for example Dall-E or Stable diffusion) may be used to turn text into graphics or to generate an image or video frames, for example based on textual combined with visual conditions.

According to various embodiments, Midjourney, Inc's Midjourney, and/ or OpenAl's DALL-E and and/ or Stability Al's Stable Diffusion may be employed to provide generative artificial intelligence services to generate images with prompts.

According to various embodiments, the signals of DMS (driver monitoring systems) and/or OMS (occupant monitoring systems) and the technique of generative AI may be leveraged to enhance the user experience and provide entertainment, for example for a trip preview.

According to various embodiments, an Al-based trip preview, including image generation based on cabin sensing data, may be provided. For example, a system and a method for visual generative trip preview by the cabin sensing signals may be provided.

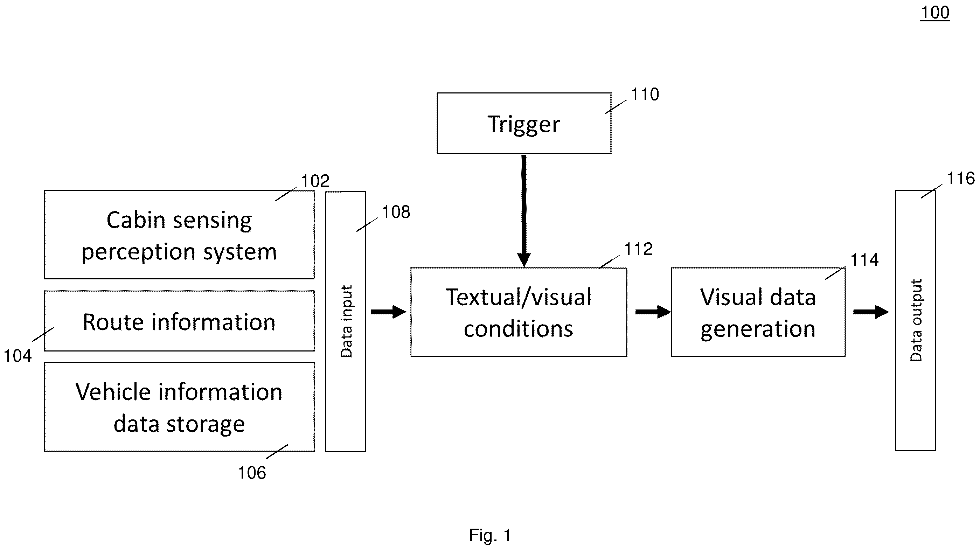

Fig. 1 shows an illustration 100 of a system for image generation according to various embodiments. A cabin sensing perception system 102, route information 104 and a vehicle information data storage 106 may provide data input 108 to a module 112 for textual and/or visual condition acquisition. The module 112 may be triggered by a trigger 110, and may involve a visual data generation module 114 to provide a data output 116. The data output 116 may be an image, for example a still image (or picture) or a moving image (or movie or video or video sequences).

The trigger 110 may be a user initiated trigger, for example triggered by a specific command (for example voice or text).

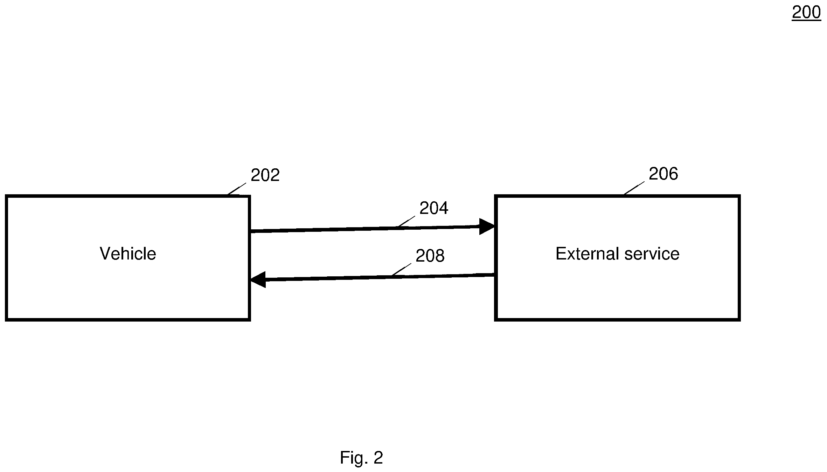

The trigger 110 may be a third party trigger, wherein a third party may trigger the image generation outside the vehicle based on information from the vehicle provided to an outside service via defined software interface (for example like illustrated in Fig. 2 below).

In another embodiment, the trigger 110 may be activated automatically; in other words, the system may automatically generate the query for generating the image based on the information on occupants, vehicle, and route.

The vehicle information data storage 106 may store information on the vehicle, for example vehicle type (or vehicle specifications), information about the vehicle utilization (for example information on whether the vehicle is used as a family car, as a shared car or as a commercial vehicle), information about regular passengers or users (for example information on how frequent usage is), information on users, and / or information on previous rides.

Route information 104 may include information on the route of the vehicle, for example a navigation destination, a road type (for example highway, inner city, or rural road), and/ or sights or points of interest in proximity or along the route.

The trigger 110 may be a trigger to start the generation. For example, the trigger 110 may be a user request (in other words: user command), or an automated trigger. The trigger of the image generation may be a command initiated by a subject in the cabin for example via voice, gesture, or touch, or may be automatically triggered upon certain events (for example destination entered, certain POI (point of interest) in proximity, or at a specific time interval).

The cabin sensing perception 102 (which may also be referred to as cabin sensing system or as perception system) may for example include a face recognition system, and/ or a body tracking system, and/ or an object detection system, and/ or an activity classification system (for example to classify behavior and/ or gestures and/ or interaction, for example between occupants or between occupants and the vehicle), and/ or a passenger classification system (which may, for example, classify age, and/ or size, and/ or gender, and/ or clothing type, and/ or emotions, and/ or facial expressions, and/ or hair color of one or more of the occupants or driver of the vehicle).

The visual data generation module 114 may create an image.

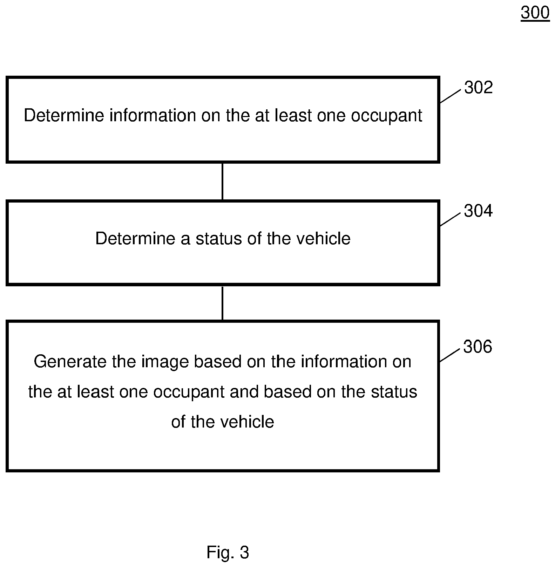

The image may be created on a system provided in the vehicle. Alternatively, at least some parts of the processing (for example some parts of the processing illustrated in Fig. 3) may be provided outside the vehicle, for example in a cloud service. For example, text query generation may be provided by a system provided in the vehicle, and the image may be generated outside the vehicle, for example in a cloud service. The image generated outside the vehicle may be transmitted back to the vehicle, or may be directly transmitted to a cloud service like a web application and/ or a social media platform and/ or to one or more recipients via email (without being transmitted to the vehicle).

The image may be output on a display of the vehicle, and/ or (independent from the vehicle) on a (smart)phone, and/ or a web application, and/ or a social media platform, and/ or via email.

The image may be output or displayed safely; for example, the image may be presented only to passengers, but not to a driver during drive, or to the driver only in safe conditions (for example during a traffic jam, or while taking a break, for example on a parking lot).

According to various embodiments, the system may already know the type of vehicle (for example whether it is a private car, a shared car, a commercial car, or any other kind of car) prior to the trip. If the vehicle is a private car, the system may build and maintain a history of people (for example a family) that often uses the car.

Seating pose information and seat assignment information (which may be the information who sits where and how) may be mapped to another vehicle (for example space shuttle, or horse carriage, or sports car), and an image may be determined or generated showing the occupants in that other vehicle.

According to various embodiments, the people may be segmented (in other words: masked) and the background may be replaced. According to another embodiment, the information may be used to generate a text query based on which the output image is generated.

According to various embodiments, the image generation may be hosted inside the vehicle on an embedded controller, or outside the vehicle (for example in the cloud).

According to various embodiments, the cabin sensing system may be used to build meta data information, for example a history for users over time, and may accordingly learn from several trips. For example, passengers that are using the car frequently may be recognized, and/ or patterns of repeated behavior may be found.

The meta data may include information provided, for example, by a face recognition system (for example identifier (ID) of a person recognized, or encoding or embedding of face information, or sample face images). The meta data may further include personal data assigned to ID (for example age, and/ or gender, and/ or height, and/ or color preference, and/ or music preference, and/ or friends, and/ or personal attributes), either automatically derived via the on-board system or manually entered by the passengers into some user profile, or via external databases (for example provided by a link to Facebook, Instagram, Spotify, or Google).

For image creation, data base information (for example including the meta data) may be used to further customize the text query for the image generator.

Fig. 2 shows an illustration 200 of external triggering of image generation according to various embodiments. A vehicle 202 may collect information, for example information on the occupants and/ or information on its location and/ or information on a route of the vehicle (for example based on information provided by the navigation system of the vehicle). The vehicle 202 may transmit the information 204 to an external service 206. For example, the information 204 may be transmitted repeatedly, for example regularly, for example in pre-determined intervals of time or in pre-determined intervals of distance travelled by the vehicle. The external service 206 may evaluate the information 204 and may determine based on the information 204 whether an image is to be created. The determination whether an image is to be created may be carried out for example based on the location of the vehicle (for example based on whether the location is near to a sight which could be included in the image), and/ or based on the route of the vehicle (for example based on whether the route and/ or the destination of the vehicle is near to a sight which could be included in the image). If the external service 206 determines that an image is to be created, the external service 206 may generate the image and may provide the image 208 back to the vehicle (or directly to another external service like a web application, a social media platform or via email), or may provide a trigger 208 to the vehicle 202 to generate the image (upon which the image may be generated by the vehicle 202).

Fig. 3 shows a flow diagram 300 illustrating a method for generating an image related to at least one occupant of a vehicle according to various embodiments. At 302, information on the at least one occupant may be determined, for example using a sensor, for example a camera. At 304, a status of the vehicle may be determined, for example from a vehicle information storage. At 306, the image may be generated based on the information on the at least one occupant and based on the status of the vehicle.

According to various embodiments, the information on the at least one occupant may include or may be information on the number of occupants.

According to various embodiments, the information on the at least one occupant may include or may be an image for each of the occupants.

According to various embodiments, the information on the at least one occupant may include or may be an age for each of the occupants.

According to various embodiments, the status of the vehicle may include or may be a status of a navigation system of the vehicle.

According to various embodiments, the status of the vehicle may include or may be a destination of the vehicle.

According to various embodiments, information related to the destination may be determined.

According to various embodiments, the image is generated further based on the information related to the destination.

According to various embodiments, an instruction may be determined based on the information on the at least one occupant and based on the status of the vehicle, and the image may be generated based on the instruction.

According to various embodiments, the instruction may include or may be a textual instruction.

According to various embodiments, the image may be generated based on the instruction by providing the instruction to a trained machine learning method.

According to various embodiments, the trained machine learning method may include or may be at least one of Midjourney, Inc's Midjourney, OpenAl's DALL-E or Stability Al's Stable Diffusion.

Each of the steps 302, 304, 306 and the further steps described above may be performed by computer hardware components.

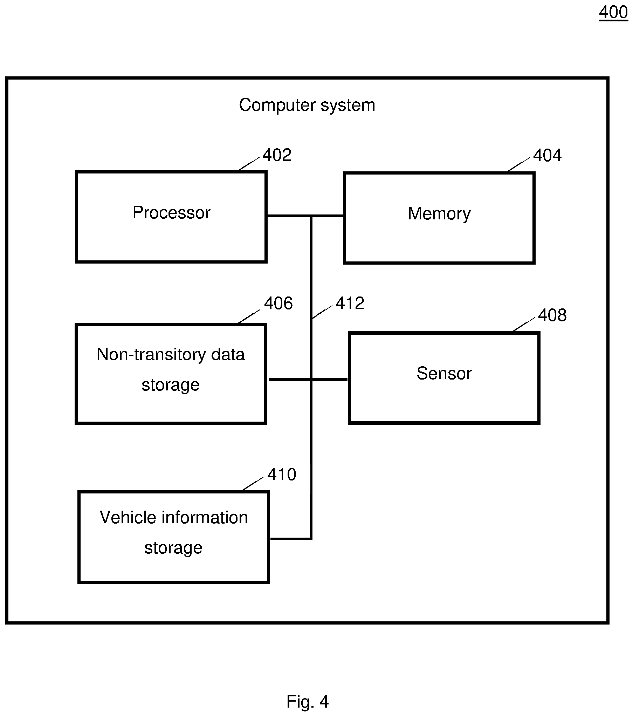

Fig. 4 shows a computer system 400 with a plurality of computer hardware components configured to carry out steps of a computer implemented method for generating an image related to at least one occupant of a vehicle according to various embodiments. The computer system 400 may include a processor 402, a memory 404, and a non-transitory data storage 406. A sensor 408 (for example a camera) and/or a vehicle information storage 410 may be provided as part of the computer system 400 (like illustrated in Fig. 4), or may be provided external to the computer system 400.

The processor 402 may carry out instructions provided in the memory 404. The non-transitory data storage 406 may store a computer program, including the instructions that may be transferred to the memory 404 and then executed by the processor 402. The sensor 408 may be used for determining information on the at least one occupant. The vehicle information storage 410 may store information on a status of the vehicle.

The processor 402, the memory 404, and the non-transitory data storage 406 may be coupled with each other, e.g. via an electrical connection 412, such as e.g. a cable or a computer bus or via any other suitable electrical connection to exchange electrical signals. The sensor 408 and/or the vehicle information storage 410 may be coupled to the computer system 400, for example via an external interface, or may be provided as parts of the computer system (in other words: internal to the computer system, for example coupled via the electrical connection 412).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 400.

With the methods and systems according to various embodiments, the image that is determined may be fully customized based on the incumbent conditions, which may provide a more personal experience than just showing standard pictures that triggers excitement, entertains the passengers, and enhances user experience.

Based on classification of trips, the output may be different or completely blocked (for example, the generation of the image may be limited to special trips, and may not be provided on commutes).

There may be business interest to influence what POIs are selected for the image generation (for example for a trip preview, for example like illustrated in Fig. 2 above), for example to attract the passengers to make a certain stop or visit a certain location at the destination.

### Reference numeral list

- 100: illustration of a system for image generation according to various embodiments
- 102: cabin sensing perception system
- 104: route information
- 106: vehicle information data storage
- 108: data input
- 110: trigger
- 112: module for textual and/or visual condition acquisition
- 114: visual data generation module
- 116: data output

- 200: illustration of external triggering of image generation according to various embodiments
- 202: vehicle
- 204: information from vehicle
- 206: external service
- 208: image or trigger

- 300: flow diagram illustrating a method for generating an image related to at least one occupant of a vehicle according to various embodiments
- 302: step of determining information on the at least one occupant
- 304: step of determining a status of the vehicle
- 306: step of generating the image based on the information on the at least one occupant and based on the status of the vehicle

- 400: computer system according to various embodiments
- 402: processor
- 404: memory
- 406: non-transitory data storage
- 408: sensor
- 410: vehicle information storage
- 412: connection

## Claims

1. Computer implemented method for generating an image related to at least one occupant of a vehicle,
the method comprising the following step carried out by computer hardware components:
- determining (302) information on the at least one occupant;
- determining (304) a status of the vehicle; and
- generating (306) the image based on the information on the at least one occupant and based on the status of the vehicle.

2. The computer implemented method of claim 1,
wherein the information on the at least one occupant comprises information on the number of occupants.

3. The computer implemented method of at least one of claims 1 or 2,
wherein the information on at least one of the occupants comprises an image for the respective occupant.

4. The computer implemented method of at least one of claims 1 to 3,
wherein the information on the at least one occupant comprises an age for each of the occupants.

5. The computer implemented method of at least one of claims 1 to 4,
wherein the status of the vehicle comprises a status of a navigation system of the vehicle.

6. The computer implemented method of at least one of claims 1 to 5,
wherein the status of the vehicle comprises a destination of the vehicle.

7. The computer implemented method of at least one of claims 1 to 6, further comprising the following step carried out by the computer hardware components:
determining information related to the destination.

8. The computer implemented method of at least one of claims 1 to 7,
wherein the image is generated further based on the information related to the destination.

9. The computer implemented method of at least one of claims 1 to 8, further comprising the following step carried out by the computer hardware components:
determining an instruction based on the information on the at least one occupant and based on the status of the vehicle;
wherein the image is generated based on the instruction.

10. The computer implemented method of at least one of claims 1 to 9,
wherein the instruction comprises a textual instruction.

11. The computer implemented method of claim 10,
wherein the image is generated based on the instruction by providing the instruction to a trained machine learning method.

12. The computer implemented method of claim 11,
wherein the trained machine learning method comprises at least one of Midjourney, Inc's Midjourney, OpenAl's DALL-E or Stability Al's Stable Diffusion.

13. Computer system (400), the computer system comprising a plurality of computer hardware components configured to carry out steps of the computer implemented method of at least one of claims 1 to 12.

14. Vehicle, comprising the computer system (400) of claim 13, a sensor (402) and a storage (404), the sensor (402) configured to determine the information on the at least one occupant, and the storage (404) configured to store information on the status of the vehicle.

15. Non-transitory computer readable medium comprising instructions for carrying out the computer implemented method of at least one of claims 1 to 12.
